# EUROPEAN PATENT APPLICATION

(11) **EP 3 608 084 A1**
(43) Date of publication of application: **12.02.2020**
(21) Application number: 18188069.1
(22) Date of filing: 08.08.2018
(51) Int. Cl.: B29C 64/20, B23D 59/00, B33Y 30/00, B29C 64/40, B29C 64/30, B29C 64/245

(54) **SEPARATING DEVICE**

(71) Applicant: Concept Laser GmbH, 96215 Lichtenfels (DE)
(72) Inventor: Braunroth, Domenik, 96465 Neustadt bei Coburg (DE); Beck, Moritz, 96052 Bamberg (DE)
(74) Representative: Hafner & Kohl Patent- und Rechtsanwälte Partnerschaft mbB

(57) **Abstract**

Separating device (1) for separating at least one object (2 - 10) from an object carrier (11), in particular for separating an additively built three-dimensional object (2 - 10) from a build plate, preferably built via an apparatus for additively manufacturing three-dimensional objects (2 - 10) by means of successive layerwise selective irradiation and consolidation of layers of a build material which can be consolidated by means of an energy source, which separating device (1) comprises at least one separating element (12) that is adapted to remove material for separating the at least one object (2 - 10) from the object carrier (11), wherein a control unit (15) is provided that is adapted to control at least one operational parameter of the at least one separating device (1), in particular a feed rate and/or a cutting rate of the separating element (12), dependent on at least one object parameter of the at least one object (2 - 10).

## Description

The invention relates to a separating device for separating at least one object from an object carrier, in particular for separating an additively built three-dimensional object from a build plate, wherein the object is preferably built via an apparatus for additively manufacturing three-dimensional objects by means of successive layerwise selective irradiation and consolidation of layers of a build material which can be consolidated by means of an energy source, which separating device comprises at least one separating element that is adapted to remove material for separating the at least one object from the object carrier.

Apparatuses for additively manufacturing three-dimensional objects are generally known from prior art. Usually, after an additive manufacturing process is finished, the object carrier onto which the object has additively been built may be removed from the build chamber in which the additive manufacturing process was performed. Also, the non-consolidated build material that surrounds the object can be removed. Afterwards, the object has to be removed from the object carrier, for example removed from a build plate on which the object has layerwise been built in the additive manufacturing process. Typically, separating devices are used to separate the object from the object carrier, e.g. band saws, wire eroding machines and the like.

Further, it is known from prior art that operational parameters of the separating device influence the quality of the separation process, e.g. the surface quality of the object, in particular at a separation surface / separating surface via which the object was connected to the object carrier. Those operational parameters of the separating device are usually manually adjusted by an operator, wherein it usually depends on the judgement and the experience of the operator of the separating device to adjust the correct operational parameters for the at least one object to be separated from the object carrier. As a variety of object parameters directly influence the separation process and different objects require different operational parameters to be adjusted, the correct (optimal) adjustment of the operational parameters of the separating device can be difficult.

It is an object of the present invention to provide a separating device, wherein the adjustment of the at least one operational parameter is improved.

The object is inventively achieved by a separating device according to claim 1. Advantageous embodiments of the invention are subject to the dependent claims.

The separating device described herein is preferably a separating device for separating three-dimensional objects from an object carrier which object are additively built via an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. In other words, the separating device may be used to separate an additively built object from the corresponding object carrier.

A respective build material used to additively build the three-dimensional object in the apparatus can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the separating device is used to separate an (additively built) object from the object carrier on which the object is built during the (additive) manufacturing process. The object carrier may be a build plate, e.g. a metal plate, onto which the object is layerwise and successively built. The invention is based on the idea that a control unit is provided which is adapted to control at least one operational parameter of the at least one separating device, in particular a feed rate and/or a cutting rate of the separating element, dependent on at least one object parameter of the at least one object. Therefore, it is possible to control one or more operational parameters of the separating device, such as motion parameters of the separating element, preferably the feed rate and/or a cutting rate of the separating element, wherein the control is performed based on at least one object parameter of the at least one object.

In other words, at least one object parameter of the at least one object is determined, for example the object position, wherein the separating device can be adjusted dependent on the determined object parameter. For example, dependent on the position in which the object is built on the object carrier, the operational parameter of the separating device can be adjusted accordingly, for example adjusting a suitable feed rate and/or cutting rate of the separating element to enhance the quality of the separating process. By automatically taking the object parameter into calculation and therefore, automatically adjusting the separating device, it is possible to enhance the object quality, in particular the quality of separating surfaces of the object and as well, enhance the tool life, for example by reducing the wear on the separating element by adjusting the correct motion parameters, in particular the cutting rate and the feed rate.

According to a preferred embodiment of the inventive separating device, the object parameter may be or may comprise an object dimension of the at least one object and/or an object position of the at least one object on the object carrier and/or an object orientation of the at least one object on the object carrier and/or at least one chemical parameter and/or at least one physical parameter and/or at least one mechanical parameter of the object, in particular the build material used to build the object. Hence, various parameters may be taken into calculation via the object parameter to adjust and control the operational parameter of the separating device accordingly.

For example, the dimension, such as the size or the width or length of the object can be taken into calculation for an adjustment of the operational parameter, such as the feed rate or the cutting rate. It is also possible to take into calculation where the object is additively built on the object carrier or, in case more than one object is additively built on the object carrier, where the individual objects are positioned on the object carrier. It is also possible to take the object orientation into calculation, e.g. how the at least one object is oriented relative to the object carrier, wherein the object orientation can significantly influence the separation process, as the orientation defines the contact surface of the object with the separating element, e.g. the saw blade. Other parameters that can be taken into calculation may be chemical, physical and/or mechanical parameters of the object, for example the type of build material that is used or the structure of the object, e.g. whether the object contains hollow parts or solid parts or whether the object is massive or comprises filigree parts.

Further, the object parameter may relate to a separating surface (cutting surface) the at least one object provides for the at least one separating element and/or the parameter may relate to a material distribution of the at least one object. The term "separating surface" in the scope of this application refers to the surface with which the object comes in contact with the separating element during the separating process. Of course, the separating surface may vary during the separating process, as the separating element cuts through the object. The separating surface directly influences the behavior during the separating process, wherein taking the separating surface into calculation allows for adjusting the operational parameters of the separating device for enhancing the quality of the separating process. For example, it may be beneficial to adjust the operational parameter, for example the feed rate or the cutting rate of the separating element differently for different separating surfaces, for example different for at least one object providing a larger separating surface compared with an object providing a comparatively smaller separating surface.

Further, the material distribution of the at least one object may be taken into calculation, wherein, as described before, different objects may require different operational parameters, such as different feed rates and/or different cutting rates. The material distribution of the at least one object defines how the material of the object is distributed over the object or the object cross section, for example whether the object is a massive structure or comprises at least one hollow portion. Suitable operational parameters of the separating device can be adjusted, preferably automatically, based on the object parameter, e.g. defining the separating surface the at least one object provides and how the material is distributed over the at least one object in the separating plane, i.e. the plane in which the separating element removes material to separate the object from the object carrier, e.g. a cutting plane.

The control unit of the inventive separating device may further be adapted to adjust at least two different operational parameters, in particular motion parameters, for two different regions, in particular for empty run and for separating at least one object. The term "empty run" refers to an operational state of the separating device in which the separating device is moved relative to the object carrier and/or the at least one object, wherein the separating element is not in contact with an object, i.e. does not perform a separating process step, for example when the separating element is moved towards the next object to be separated from the object carrier.

According to this embodiment, it is possible to define at least two different operational parameters, such as different motion parameters, for example for a region in which an object is present and a region in which no object is present or in other words, different operational parameters may be defined for separating objects and empty run. Hence, it is possible to move the separating element faster in empty run, with respect to the feed rate of the separating element, to ensure that the separating element is moved towards the next object as fast as possible. In a region in which at least one object is present, the operational parameter can instead be adjusted dependent on the object parameter of the at least one object present in the corresponding region to ensure that the separating process meets predefined quality requirements, in particular regarding the quality of the at least one separating surface along which the object is separated from the object carrier.

The inventive separating device may further be improved in that the control unit may be adapted to assign at least one object to a defined object class or object category dependent on the at least one object parameter of the object. Of course, multiple object categories may be defined for different object parameters, such as different object categories for different object dimensions and object categories for different object orientations etc. For example, at least two, in particular multiple object classes or object categories may be defined, wherein each object may be assigned to one of the at least two object classes or object categories dependent on the corresponding object parameter of the object. Hence, it is possible to adjust the at least one operational parameter of the separating device dependent on the object class or the object category the at least one object is assigned to, wherein it is possible to adjust the same operational parameters of the separating device for every object that is assigned to the same object class or object category. Thus, objects of the same object category can be separated from the object carrier via the separating device using the same operational parameters.

For example, at least one object category may be or may comprise support objects or filigree objects or regular objects or high-volume objects. Thus, support objects, such as support structures that support at least one part of the object during the additive manufacturing process, for example for supporting overhangs or filigree structures of the object, can be assigned to an individual object category, wherein different operational parameters of the separating device can be adjusted to separate such objects comprising support structures from the object carrier. As support structures usually are to be removed from the object anyway, the quality requirements are low for support objects, in particular the quality of the separating process of support structures is not relevant. Hence, it is possible to separate support structures as fast as possible or with the lowest possible wear on the separating element, for instance.

On the other hand, filigree objects may be assigned to an object category, such as small or detailed parts of an additively built object. Those filigree structures or parts of an object require much higher quality requirements and therefore, specific operational parameters of the separating device. The regular object category, for example, may define objects that do not comprise any filigree structures and can be separated from the object carrier using "standard" operational parameters. Further, high-volume objects may be assigned to a corresponding category wherein a threshold value for a minimum volume /size of the cross sectional area may be defined, wherein objects comprising a comparatively higher volume can be assigned to the high-volume object category. Hence, the high-volume object can be separated from the object carrier using defined operational parameters of the separating device, for example higher feed rates and higher cutting rates compared with filigree objects, for instance.

According to another embodiment of the inventive separating device, the control unit may be adapted to adjust the at least one operational parameter in advance to and/or during and/or after a separating process. Therefore, it is possible to adjust the at least one operational parameter in advance to a separating process, for example when the separating element is guided or moved towards the next object to be separated from the object carrier. It is also possible to adjust the at least one operational parameter during the separating process, for example when separating an object from the object carrier that has a non-uniform material distribution, for example comprising hollow portions, or a non-symmetric shape. It is also possible to adjust the at least one operational parameter after a separation process of an object is finished, for example after an object has been separated from the object carrier and before the separating element arrives at the next object.

Further, the control unit may be adapted to reduce the feed rate at the beginning and/or at the end of a separating process. Thus, the quality of the separation process can significantly be enhanced by reducing the feed rate at the beginning and/or at the end of a separating process to allow the separating element to cut through the object uniformly with defined separating quality requirements.

According to another embodiment of the inventive separating device, a receiving unit may be provided that is adapted to receive the object carrier during the separation process, wherein the control unit may be adapted to control at least one actuator that is adapted to adjust an orientation of the object carrier, in particular with respect to the at least one separating element. Therefore, it is possible to mount the object carrier to a receiving unit that is adapted to receive the object carrier for performing the separating process. The receiving unit may, for example, comprise receiving means such as clamping devices, with which the object carrier may be mounted to the receiving unit. Additionally, at least one actuator may be provided for adjusting an orientation of the object carrier for example with respect to the at least one separating element, preferably by rotating the object carrier relative to the separating element. Thus, the control unit may control the actuator to change or adjust the orientation of the object carrier and therefore, the orientation of the object built on the object carrier with respect to the separating element. By adjusting the orientation of the object carrier, the separating surface of the at least one object can be adjusted and varied, i.e. the surface via which the object contacts the separating element.

Preferably, the actuator may be adapted to control the orientation in advance to and/or during and/or after a separation process. Thus, by changing the orientation of the object carrier, the orientation of the object is also changed together with the change of the orientation of the object carrier, as the object is (additively built) on the object carrier, for example, the orientation of the object with respect to the separating element can be adjusted. The orientation may, for example, be adjusted in advance to a separation process, for example for turning the object in a desired orientation before the separating element contacts the object. Further, it is possible to adjust the orientation during a separation process, for example while an object is separated from the object carrier, e.g. an object with a non-uniform material distribution, for example a hollow part or an asymmetric object. Hence, the orientation may be adjusted while the object is separated and while the separating element contacts the object. Also, it is possible to adjust the orientation after the separation process is finished, for example between two separation processes of two objects built to the same object carrier. Adjustments of the orientation in advance to, during or after a separation process can arbitrarily be combined.

According to another preferred embodiment, the control unit may be adapted to prioritize one of at least two object parameters of two objects with at least one portion spaced the same distance away from the at least one separating element for the control of the at least one operational parameter, in particular motion parameter. Hence, if two or more objects are present/additively built on the object carrier, the control unit may prioritize at least one object parameter of those objects, wherein the control of the operational parameter is performed based on the prioritized object parameter. Thus, the prioritized object parameter may be used for the control or the adjustment, respectively, of the operational parameter of the separating device. In other words, the control unit is adapted to prioritize an object or multiple objects, as defined by the respective object parameter, for which the adjustment or the control of the operational parameter of the separating device should be performed.

Hence, the control unit may choose at least one object that defines how the separation process should be performed using the separating device. For example, one object may be critical in terms of quality (or more critical than at least one other object), whereas the at least one other object may be an object for which the quality is not relevant, in particular one object may be a support object and the other object may be a technical component, wherein the technical component may be prioritized by the control unit in that the operational parameter may be adjusted dependent on the object parameter of the technical component. Thus, the other object, e.g. the support object may be separated using the same operational parameter adjusted for the separation process of the technical component.

In particular, the control unit may be adapted to prioritize at least one object parameter dependent on the category of the corresponding object and/or the amount of objects of the corresponding category. According to the first alternative, it is possible to take into calculation which category the corresponding object is assigned to. As described before, some object categories may be of higher relevance in terms of quality requirements as other objects assigned to another object category. For example, support objects that are only relevant for supporting a part of an object are not relevant for the quality of the separation process of the additively built object. Hence, any other category than the support object category may be prioritized. For example, if one object of the support category, one object of the regular category and one object of the filigree object category are present on the object carrier and spaced the same distance away from the separating element in that the three objects are separated at the same time, the control unit may prioritize the object parameter of the object of the filigree object category, as the filigree object category may pose the highest quality requirements, whereas the regular object category poses medium quality requirements and the support category does not pose any quality requirements, for instance.

Further, according to the second alternative, it is possible to take the amount of objects of the corresponding object category into calculation, for example if more objects from the regular or high-volume object category are present than from the filigree parts category, the control unit may control the operational parameter based on the category with the most objects assigned thereto.

The inventive separating device may further be improved in that the control unit may be adapted to receive the at least one object parameter from a determination device or a data storage device, in particular a data storage device of an additive manufacturing apparatus. The at least one object parameter may, inter alia, be measured, for example by a three-dimensional scanner or the object parameter may be derived from a data file, e.g. generated via a design software, such as a computer aided design (CAD) program or directly from the build data used by the additive manufacturing apparatus. In other words, it is possible that the file that was used to build the object on the additive manufacturing apparatus can be used to derive the object parameter of the at least one object, for example the object position of the object carrier or the dimensions of the object or any other arbitrary object parameter, as described before.

Additionally, the object parameter or the at least one operational parameter of the separating device that was defined / adjusted dependent one a corresponding object parameter may be stored, e.g. in the control unit or another data storage unit of the separating device. Hence, for identical build processes, e.g. identical objects to be removed from an object carrier, the separating device may use stored operational parameters or parameter sets for separating the objects from the object carrier. Therefore, it is not necessary to generate and receive the object parameters for every additive manufactured object for identical processes, but for identical processes it is possible to use previously stored object parameters.

The separating device may further be improved in that the control unit may receive at least one user input, wherein the at least one object parameter may be adjusted based on the user input. For example, it is possible to adjust or refine an object parameter of at least one object on an object carrier, e.g. as defined via object data received from an additive manufacturing apparatus. Hence, the user input may be taken into calculation to adjust the at least one object parameter defined by the additive manufacturing apparatus, CAD-software, a 3D scanner or the like.

Further, the separating device may be built as or comprise at least one cutting device, in particular a band saw and/or at least one wire eroding machine (electric discharge machine) and/or at least one water jet cutter. The cutting device, for example the band saw may be programmed based on the object parameter, for example derived from a build file received from an additive manufacturing apparatus. Hence the operational parameters of the separating device, such as the feed rate and/or the cutting rate of the separating element, for example the saw blade, can be adjusted to properly separate the at least one object from the object carrier. Dependent on the type of separating device, different operational parameters may be adjusted / chosen. For example, if the separating device comprises a wire eroding machine, a voltage and/or a current and/or a pulse-on time and/or a pulse-off time and/or a material removal rate and the like can be adjusted.

Besides, the invention relates to a method for separating at least one object from an object carrier, in particular from a build plate onto which the object is additively built, preferably using an inventive separating device, as described before, wherein at least one operational parameter of the separating device is controlled, in particular a feed rate and/or a cutting rate of a separating element of the separating device, dependent on at least one object parameter of the at least one object.

Self-evidently, all features, details and advantages described with respect to the inventive separating device are fully transferable to the inventive method.

Exemplary embodiments of the invention are described with reference to the Fig. The Fig. are schematic diagrams, wherein
- Fig. 1: shows an inventive separating device; and
- Fig. 2: shows the inventive separating device from Fig. 1.

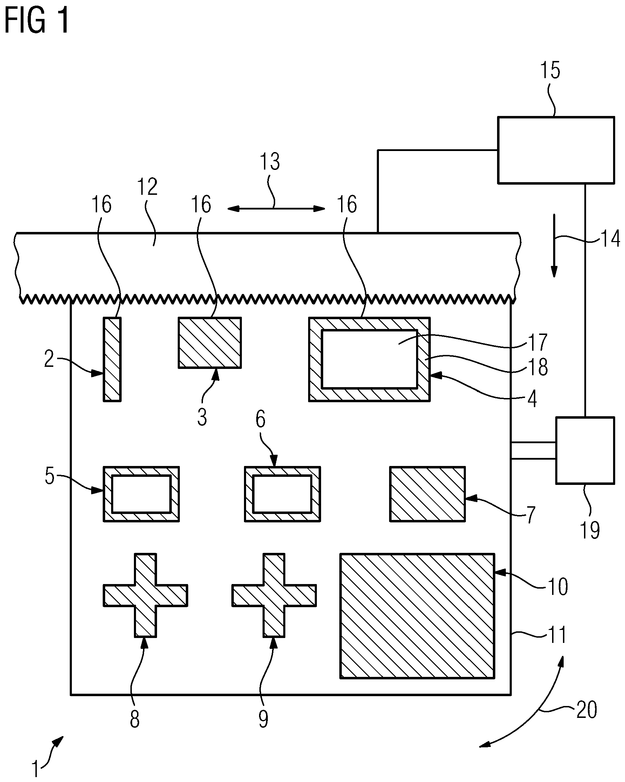

Fig. 1 shows a separating device 1 for separating objects 2 - 10 from an object carrier 11. The objects 2 - 10 are, for example, additively built in an additive manufacturing apparatus (not shown) directly onto the object carrier 11 and have to be separated from the object carrier 11 via the separating device 1. The separating device 1 comprises a separating element 12, for example a band saw blade, which can be set in motion, e.g. with a defined cutting rate and feed rate, to remove material to separate the objects 2 - 10 from the object carrier 11. As indicated by arrow 13, the cutting rate of the separating element 12 and, as indicated via arrow 14, the feed rate of the separating element 12 can be adjusted via a control unit 15. Hence, the feed rate relates to the movement of the separating element 12 towards the objects 2 - 10 and the cutting rate relates to the movement of the separating element 12 essentially perpendicular to the feed rate, i.e. describing the sawing movement of the separating element 13. Of course, other operational parameters of the separating device 1 can also be adjusted via the control unit 15.

The control unit 15 is adapted to adjust the operational parameter, such as the motion parameters of the separating element 12, dependent on an object parameter of the objects 2 - 10. The object parameter may for example comprise the object dimensions, the object position, the object orientation, chemical parameters, physical parameters and mechanical parameters of the objects 2 - 10. In this exemplary embodiment, the control unit 15 takes into calculation the material of which the objects 2 - 10 are additively built in the additive manufacturing process. Further it is taken into calculation the object position of the individual objects 2 - 10 as well as the object dimensions of the objects 2-10 and the material distribution of the objects 2 - 10.

In other words, a separating surface 16, as exemplary indicated for object 3, can be derived from the object parameter which separating surface 16 is provided by the objects 2 - 10 to the separating element 12. In other words, the separating surface 16 is the surface via which the object 2 - 10 comes in contact with the separating element 12. Of course, throughout the separating process of the individual objects 2 - 10 the individual separating surfaces 16 vary as the separating element 12 removes material and cuts through the objects 2 - 10.

The object parameter indicates that the object 2 is a massive object which poses a comparatively smaller separating surface 16 towards the separating element 12, for example compared with the massive object 3 posing a larger separating surface 16 towards the separating element 12. Compared to the objects 2, 3 the object 4 comprises a hollow portion 17 with a filigree shell region 18 and a comparatively large separating surface 16. As can be derived from Fig. 1, when the separating element 12 cuts vertically through the object 4, the separating surface 16 varies, as the object 4 comprises the hollow portion 17 and the filigree shell region 18. Hence, after the separating element 12 cut through the upper part of the shell region 18 the separating surface 16 changes. Accordingly, the operational parameter can be adjusted via the control unit during the separation process of the object 4 in that the change of the separating surface 16 is taken into calculation.

Further, the operational parameter can be adjusted via the control unit 15 based on the object parameter of one of the objects 2 - 10 that is most relevant for the quality of the separating process or poses the highest quality requirements. For example, the feed rate and the cutting speed may be adjusted via the control unit 15 dependent on the region in which the separating element 12 is currently positioned relative to the object carrier 11. For example, in the situation that is depicted in Fig. 1, the feed rate can be increased and the cutting rate can be decreased, as the separating element 12 performs an "empty run", as the separating element 12 is not in contact with one of the objects 2 - 10. In the empty run the feed rate can be increased to save time in the separation process, since the separating element 12 is moved faster towards the objects 2 - 10.

Additionally, each of the objects 2 - 10 can be assigned to a specific object category, for example the objects 2, 3, 7 can be assigned to the "regular" category, wherein the objects 8, 9 being support structures can be assigned to the support object category. The objects 4, 5, 6 may be assigned to the filigree object category, as the objects 4 - 6 comprise hollow portions such as the hollow region 17 and comprise filigree shell structures, such as the filigree shell portion 18 of the object 4. Additionally, the object 10 can be assigned to the "high-volume category", as the volume of the object 10 exceeds a predefined threshold volume.

As the control unit 15 can receive all object parameters of the objects 2 - 10 the position of the contours and therefore, the positions of the separating surfaces 16 can be determined for each object. Additionally, it is possible to prioritize an object parameter of one of the objects 2 - 10. For example, for the first line in which the objects 2, 3, 4 are positioned, the control unit 15 may prioritize the object parameters of the object 4, as the object 4 is assigned to the filigree object category, whereas the objects 2 and 3 are assigned to the regular object category. As the filigree object category is more relevant in terms of separation process quality, the separation process is performed dependent on the object parameter of the object 4.

Regarding, for example the objects 5, 6, 7, the control unit 15 may prioritize the objects 5, 6 as they are assigned to the filigree objects category, whereas the object 7 is assigned to the regular object category. It is also possible to prioritize the objects parameter of the objects 5 and 6, as in the second line of objects the object category "filigree object category" is the object category comprising the most objects.

In the last line of objects in which the objecta 8, 9, 10 are arranged, the control unit 15 may prioritize the object 10 being assigned to the "high-volume object category", whereas the objects 8 and 9 are assigned to the support object category. As the support objects 8, 9 do not pose any quality requirements and merely have to be separated from the object carrier 11, any other object category can be prioritized in terms of adjusting the operational parameter of the separating device 1.

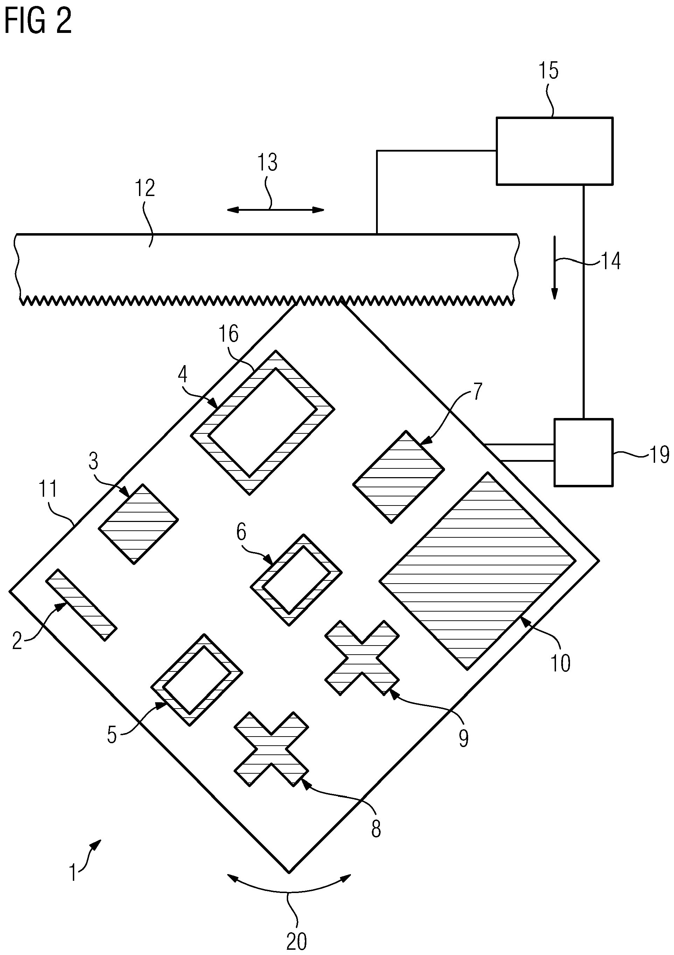

Further, the separating device 1 comprises an actuator 19 that is adapted to adjust the orientation (depicted by arrow 20) of the object carrier 11, for example by rotating a receiving unit (not shown) in which the object carrier 11 is received. Fig. 2 shows the separating device 1 with the object carrier 11 from Fig. 1, after the actuator 19 turned the object carrier 11, for example by 45°. Hence, the separating surface 16 of the object 4 has changed, wherein the separating surface 16 is significantly reduced compared to the situation in Fig. 1 allowing for an enhanced separation process via the separating element 12 removing material from the object 4 to separate the object 4 from the object carrier 11.

Of course, any arbitrary rotation and adjustment to the operational parameters, in particular the cutting speed and the feed rate of the separating element 12 is possible. The prioritizations of object parameters of the individual objects 2 - 10 are merely exemplary, wherein it is of course, possible to separate any arbitrary object 2 - 10 with any arbitrary geometry via the separating device 1. Self-evidently, the inventive method may be performed with the inventive separating device 1.

## Claims

1. Separating device (1) for separating at least one object (2 - 10) from an object carrier (11), in particular for separating an additively built three-dimensional object (2 - 10) from a build plate, preferably built via an apparatus for additively manufacturing three-dimensional objects (2 - 10) by means of successive layerwise selective irradiation and consolidation of layers of a build material which can be consolidated by means of an energy source, which separating device (1) comprises at least one separating element (12) that is adapted to remove material for separating the at least one object (2 - 10) from the object carrier (11), **characterized by** a control unit (15) that is adapted to control at least one operational parameter of the at least one separating device (1), in particular a feed rate and/or a cutting rate of the separating element (12), dependent on at least one object parameter of the at least one object (2 - 10).

2. Separating device according to claim 1, **characterized in that** the object parameter is or comprises an object dimension of the at least one object (2 - 10) and/or an object position of the at least one object (2 - 10) on the object carrier (11) and/or an object orientation of the at least one object (2 - 10) on the object carrier (11) and/or at least one chemical parameter and/or at least one physical parameter and/or at least on mechanical parameter of the object (2 - 10), in particular the build material used to build the object (2 - 10).

3. Separating device according to claim 1 or 2, **characterized in that** the object parameter relates to a separating surface (16) the at least one object (2 - 10) provides for the at least one separating element (12) and/or to a material distribution of the at least one object (2 - 10).

4. Separating device according to one of the preceding claims, **characterized in that** the control unit (15) is adapted to adjust at least two different operational parameters, in particular motion parameters, for two different regions, in particular for empty run and separating at least on object (2 - 10).

5. Separating device according to one of the preceding claims, **characterized in that** the control unit (15) is adapted to assign at least one object (2 - 10) to a defined object class or object category dependent on the object parameter of the object (2 - 10).

6. Separating device according to one of the preceding claims, **characterized in that** at least one object category is or comprises support objects (8, 9) or filigree objects (4 - 6) or regular objects (2, 3, 7) or high-volume objects (10).

7. Separating device according to one of the preceding claims, **characterized in that** the control unit (15) is adapted to adjust the at least one operational parameter in advance to and/or during and/or after a separating process of at least one object (2 - 10).

8. Separating device according to one of the preceding claims, **characterized in that** the control unit (15) is adapted to reduce the feed rate at the beginning and/or at the end of a separating process.

9. Separating device according to one of the preceding claims, **characterized by** a receiving unit that is adapted to receive the object carrier (11) during the separation process, wherein the control unit (15) is adapted to control at least one actuator (19) that is adapted to adjust an orientation of the object carrier (11), in particular with respect to the at least one separating element (12).

10. Separating device according to one of the preceding claims, **characterized in that** the actuator (19) is adapted to control the orientation in advance to and/or during and/or after a separation process.

11. Separating device according to one of the preceding claims, **characterized in that** the control unit (15) is adapted to prioritize one of at least two object parameters of two objects (2 - 10) with at least one portion spaced the same distance away from the at least one separating element (12) for the control of the at least one motion parameter.

12. Separating device according to one of the preceding claims, **characterized in that** the control unit (15) is adapted to prioritize at least one object parameter dependent on the category of the corresponding object (2 - 10) and/or the amount of objects (2 - 10) of a corresponding category.

13. Separating device according to one of the preceding claims, **characterized in that** the control unit (15) is adapted to receive the at least one object parameter from a determination device or a data storage device, in particular a data storage device of an additive manufacturing apparatus.

14. Separating device according to one of the preceding claims, **characterized in that** the separating device (1) is built as or comprises at least one cutting device, in particular a band saw and/or at least one wire eroding machine and/or at least one water jet cutter.

15. Method for separating at least one object (2 - 10) from an object carrier (11), in particular from a build plate onto which the object (2 - 10) is additively built, preferably using a separating device (1) according to one of the preceding claims, **characterized in that** at least one operational parameter of a separating device (1) is controlled, in particular a feed rate and/or a cutting rate of a separating element (12) of the separating device (1), dependent on at least one object parameter of the at least one object (2 - 10).
